# EUROPEAN PATENT APPLICATION

(11) **EP 4 803 561 A1**
(43) Date of publication of application: **09.09.2026**
(21) Application number: 24885851.6
(22) Date of filing: 31.10.2024
(51) Int. Cl.: C08G 69/26, C08G 69/30, C08L 77/06

(54) **SEMI-AROMATIC POLYAMIDE RESIN, POLYAMIDE RESIN COMPOSITION, AND METHOD FOR PRODUCING SEMI-AROMATIC POLYAMIDE RESIN**

(30) Priority: 01.11.2023 JP 2023187353
(71) Applicant: Kuraray Co., Ltd., Kurashiki-shi, Okayama 710-0801 (JP)
(72) Inventor: SAIKUSA Mao, Tsukuba-shi, Ibaraki 305-0841 (JP)
(74) Representative: Müller-Boré & Partner Patentanwälte PartG mbB
(86) International application number: PCT/JP2024/038972
(87) International publication number: WO 2025/095085

(57) **Abstract**

Provided is a semi-aromatic polyamide resin having a diamine unit and a dicarboxylic acid unit, in which the diamine unit contains 60 to 100 mol% of an aliphatic diamine unit having 7 to 13 carbon atoms with respect to 100 mol% of the diamine unit, the dicarboxylic acid unit contains 60 to 100 mol% of an aromatic dicarboxylic acid unit with respect to 100 mol% of the carboxylic acid unit, an inherent viscosity ηᵢₙₕ measured at 30°C in concentrated sulfuric acid is 1.6 to 3.0 dL/g, an amount of terminal amino groups [NH₂] is 10 to 70 microequivalent/g, an amount of terminal carboxy groups [COOH] is 10 to 90 microequivalent/g, and a ratio of the amount of terminal amino groups [NH₂] to the amount of terminal carboxy groups [COOH], [NH₂]/[COOH], is 0.1 or more and less than 1.0.

## Description

### Technical Field

The present invention relates to a semi-aromatic polyamide resin, a polyamide resin composition, and a method for producing a semi-aromatic polyamide resin. More specifically, the present invention relates to a semi-aromatic polyamide resin excellent in fatigue resistance and retention stability during melt processing, and a polyamide resin composition containing the semi-aromatic polyamide resin. The present invention also relates to a method for producing the semi-aromatic polyamide resin.

### Background Art

Resin materials such as polyamide resins are widely used in components used in automobiles, industrial machines, and the like. Many resin products have also been put into practical use as sliding members such as gears. In recent years, product development aiming at miniaturization and high output of sliding members, particularly gears, has become a trend. In order to achieve these, it is necessary to increase the torque and the rotation speed applied to the sliding member, specifically, the gear. Therefore, since a sliding member, specifically, a gear is required to be used in a higher load environment than before, there is an increasing demand for a resin material having high fatigue resistance capable of withstanding a high load. Furthermore, such a resin material is also required to have lower water absorbency in order to prevent troubles caused by poor engagement based on a dimensional change due to water absorption.

Semi-aromatic polyamide resins derived from long-chain aliphatic diamines, typified by polynonanemethylene terephthalamide (hereinafter, also referred to as PA9T) and polydecamethylene terephthalamide (hereinafter, also referred to as PA10T), are excellent in properties such as heat resistance, rigidity, and slidability, and also have high dimensional stability due to low water absorbency. Therefore, it is widely used for a sliding member, specifically a gear. On the other hand, since the fatigue resistance of the semi-aromatic polyamide resin is inferior to that of the aliphatic polyamide resin, it is desired to improve the fatigue resistance of the semi-aromatic polyamide resin.

Further, a resin material used for a sliding member, specifically a gear, is required to have stability during melt processing such as kneading or molding, that is, retention stability. A resin material having low retention stability causes a decrease in resin viscosity due to molecular chain cleavage caused by heat generated during melt processing. As a result, not only mechanical properties such as fatigue resistance are deteriorated, but also poor appearance due to generation of burning, voids, and hard spots occurs.

In general, as a method for improving the fatigue resistance of a semi-aromatic polyamide resin, a technique of increasing the molecular weight of the resin is known. As a semi-aromatic polyamide resin having an increased molecular weight, for example, PTL 1 discloses a polyamide resin in which a difference between a terminal amino group concentration and a terminal carboxy group concentration is within a predetermined range and which has a specific viscosity number. PTL 2 discloses a semi-aromatic polyamide resin in which the relationship among a terminal amino group concentration, a terminal carboxy group concentration, and a terminal concentration at which the amino group terminals are blocked with a carboxylic acid is controlled within a predetermined range. PTL 3 discloses a semi-aromatic polyamide resin which is mainly composed of terephthalic acid and 1,10-decanediamine and has improved compatibility because the ratio of a terminal amino group concentration to a terminal carboxylic acid group concentration is within a predetermined range.

In addition, a semi-aromatic polyamide resin having enhanced retention stability has also been studied. PTL 4 discloses that a polyamide resin having excellent retention stability can be obtained by setting an amount of terminal amino groups of a semi-aromatic polyamide resin to a specific range and further setting a numerical value obtained by dividing the amount of terminal amino groups by an amount of terminal carboxy groups to a predetermined numerical value or more.

### Citation List

### Patent Literature

PTL 1: JP 2015-199873 A
PTL 2: WO 2021/065205
PTL 3: JP 2016-94508 A
PTL 4: WO 2006/098434

### Summary of Invention

### Technical Problem

However, none of PTLs 1 to 3 discloses the fatigue resistance and the retention stability of a high-molecular-weight semi-aromatic polyamide resin. PTL 4 describes a semi-aromatic polyamide resin having excellent retention stability, but discloses only semi-aromatic polyamide resins having intrinsic viscosities [η] of about 1.2 dL/g in Examples, and does not describe a semi-aromatic polyamide resin having a higher intrinsic viscosity, i.e., a semi-aromatic polyamide resin having a high molecular weight and excellent retention stability.

In recent studies for increasing the molecular weight of a semi-aromatic polyamide resin, it has been found that a semi-aromatic polyamide resin having a high molecular weight has a problem that the retention stability during melt processing is lowered and fatigue resistance cannot be obtained. In particular, since the semi-aromatic polyamide resin has a high melting point, the temperature at the time of melt processing is high, and the semi-aromatic polyamide resin is easily decomposed.

Accordingly, an object of the present invention is to provide a semi-aromatic polyamide resin that is excellent in fatigue resistance and retention stability during melt processing and has a high molecular weight.

### Solution to Problem

As a result of intensive studies to solve the above problems, the present inventor has conceived of the present invention described below and found that the problems can be solved.

That is, the present invention is as follows.
[1] A semi-aromatic polyamide resin having a diamine unit and a dicarboxylic acid unit,
   in which the diamine unit contains 60 to 100 mol% of an aliphatic diamine unit having 7 to 13 carbon atoms with respect to 100 mol% of the diamine unit,
   the dicarboxylic acid unit contains 60 to 100 mol% of an aromatic dicarboxylic acid unit with respect to 100 mol% of the carboxylic acid unit,
   an inherent viscosity ηᵢₙₕ measured at 30°C in concentrated sulfuric acid is 1.6 to 3.0 dL/g,
   an amount of terminal amino groups [NH₂] is 10 to 70 microequivalent/g,
   an amount of terminal carboxy groups [COOH] is 10 to 90 microequivalent/g, and
   a ratio of the amount of terminal amino groups [NH₂] to the amount of terminal carboxy groups [COOH], [NH₂]/[COOH], is 0.1 or more and less than 1.0.
[2] The semi-aromatic polyamide resin according to [1], in which the aliphatic diamine unit having 7 to 13 carbon atoms is at least one selected from a 1,10-decanediamine unit, a 1,9-nonanediamine unit, and a 2-methyl-1,8-octanediamine unit.
[3] The semi-aromatic polyamide resin according to [1] or [2], in which the inherent viscosity ηᵢₙₕ is 1.7 to 2.5 dL/g.
[4] The semi-aromatic polyamide resin according to any one of [1] to [3], in which the inherent viscosity ηᵢₙₕ is 1.8 to 2.5 dL/g.
[5] The semi-aromatic polyamide resin according to any one of [1] to [4], in which the amount of terminal amino groups [NH₂] is 20 to 60 microequivalent/g.
[6] The semi-aromatic polyamide resin according to any one of [1] to [5], in which the amount of terminal amino groups [NH₂] is 30 to 60 microequivalent/g.
[7] The semi-aromatic polyamide resin according to any one of [1] to [6], in which the amount of terminal carboxy groups [COOH] is 30 to 80 microequivalent/g.
[8] The semi-aromatic polyamide resin according to any one of [1] to [7], in which the [NH₂]/[COOH] is 0.2 to 0.9.
[9] A polyamide resin composition containing the semi-aromatic polyamide resin according to any one of [1] to [6] and a crystal nucleating agent.
[10] The polyamide resin composition according to [9], containing 0.01 to 10 parts by mass of the crystal nucleating agent with respect to 100 parts by mass of the semi-aromatic polyamide resin.
[11] A polyamide resin composition containing the semi-aromatic polyamide resin according to any one of [1] to [10] and an antioxidant.
[12] The polyamide resin composition according to [11], containing 0.01 to 5 parts by mass of the antioxidant with respect to 100 parts by mass of the semi-aromatic polyamide resin.
[13] A polyamide resin composition containing a semi-aromatic polyamide resin having a diamine unit and a dicarboxylic acid unit,
   in which the diamine unit contains 60 to 100 mol% of an aliphatic diamine unit having 7 to 13 carbon atoms with respect to 100 mol% of the diamine unit,
   the dicarboxylic acid unit contains 60 to 100 mol% of an aromatic dicarboxylic acid unit with respect to 100 mol% of the carboxylic acid unit,
   in which the semi-aromatic polyamide resin has a weight-average molecular weight Mw of 40,000 to 90,000 in terms of polymethyl methacrylate as measured by gel permeation chromatography (GPC),
   an amount of terminal amino groups [NH₂] is 10 to 70 microequivalent/g,
   an amount of terminal carboxy groups [COOH] is 10 to 90 microequivalent/g, and
   a ratio of the amount of terminal amino groups [NH₂] to the amount of terminal carboxy groups [COOH], [NH₂]/[COOH], is 0.1 or more and less than 1.0.
[14] The polyamide resin composition according to [13], further containing at least one selected from the group consisting of a crystal nucleating agent, an antioxidant, a slidability improver, and a lubricant.
[15] The polyamide resin composition according to [14], containing 0.01 to 10 parts by mass of at least one selected from the group consisting of the crystal nucleating agent, the antioxidant, the slidability improver, and the lubricant with respect to 100 parts by mass of the semi-aromatic polyamide resin.
[16] A molded article formed from the polyamide resin composition according to any one of [9] to [15].
[17] The molded article according to [16], which is a sliding member.
[18] The molded article according to [17], which is a gear.
[19] A method for producing a semi-aromatic polyamide resin having a diamine unit and a dicarboxylic acid unit, the method including:
   a first reaction step of subjecting a raw material containing an aliphatic diamine, an aromatic dicarboxylic acid, and a terminal blocking agent to a polycondensation reaction to obtain a primary polycondensation reaction product, and
   a second reaction step of subjecting the primary polycondensation reaction product to a solid phase polymerization to obtain the semi-aromatic polyamide resin,
   in which a ratio x/y of a number of moles of amino groups (x) to a number of moles of carboxy groups (y) contained in the raw material is more than 1.01 and 1.03 or less, and
   an amount of the terminal blocking agent contained in the raw material is 0.1 to 1.5 mol% with respect to 100 mol% of the diamine contained in the raw material.

### Advantageous Effects of Invention

According to the present invention, it is possible to provide a semi-aromatic polyamide resin excellent in fatigue resistance and retention stability during melt processing and having a high molecular weight, and a polyamide resin composition containing the semi-aromatic polyamide resin.

### Description of Embodiments

The following description is based on an example of an embodiment of the present invention (hereinafter, sometimes referred to as "the present embodiment"). However, embodiments described below are examples for embodying the technical idea of the present invention, and the present invention is not limited to the following description.

In addition, in the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.

In the description herein, when there is a description pertaining to a numerical range of "XX to YY", the description means "XX or more and YY or less".

In the description herein, "- unit" ("-" herein represents a monomer) means a "constituent unit derived from -". For example, a "dicarboxylic acid unit" means a "constituent unit derived from dicarboxylic acid", and a "diamine unit" means a "constituent unit derived from diamine".

### [Semi-Aromatic Polyamide Resin]

The semi-aromatic polyamide resin of the present embodiment has a diamine unit and a dicarboxylic acid unit. In the present embodiment, the diamine unit contains 60 to 100 mol% of a diamine unit derived from an aliphatic diamine having 7 to 13 carbon atoms with respect to 100 mol% of the diamine unit, and the dicarboxylic acid unit contains 60 to 100 mol% of a dicarboxylic acid unit derived from an aromatic dicarboxylic acid with respect to 100 mol% of the dicarboxylic acid unit.

### (Diamine Unit)

The diamine unit contains 60 to 100 mol% of an aliphatic diamine unit having 7 to 13 carbon atoms with respect to 100 mol% of the diamine unit. The aliphatic diamine unit having 7 to 13 carbon atoms may be a linear diamine unit and/or a branched diamine unit. That is, the aliphatic diamine unit having 7 to 13 carbon atoms may be at least one selected from the group consisting of a linear diamine unit and a branched diamine unit. The aliphatic diamine unit having 7 to 13 carbon atoms may include only one of a linear diamine unit and a branched diamine unit or may include both of a linear diamine unit and a branched diamine unit.

Examples of the linear diamine unit include a diamine unit derived from at least one or more selected from the group consisting of 1,7-heptanediamine, 1,8-octanediamine, 1,9-nonanediamine, 1,10-decanediamine, 1,11-undecanediamine, 1,12-dodecanediamine, and 1,13-tridecanediamine.

Examples of the branched diamine unit include a diamine unit derived from at least one selected from the group consisting of 2-butyl-2-ethyl-1,5-pentanediamine, 2,2,4-trimethyl-1,6-hexanediamine, 2,4,4-trimethyl-1,6-hexanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, 5-methyl-1,9-nonanediamine, 2-ethyl-1,7-heptanediamine, 2-ethyl-1,8-octanediamine, 2-propyl-1,6-hexanediamine, 2-propyl-1,7-heptanediamine, and 2,4-diethyl-1,6-hexanediamine.

From the viewpoint of low water absorbency and heat resistance, the aliphatic diamine unit having 7 to 13 carbon atoms is preferably a diamine unit derived from at least one selected from the group consisting of 1,9-nonanediamine, 1,10-decanediamine, and 2-methyl-1,8-octanediamine, and more preferably a diamine unit derived from 1,9-nonanediamine and/or a diamine unit derived from 2-methyl-1,8-octanediamine. That is, the aliphatic diamine unit having 7 to 13 carbon atoms is more preferably a diamine unit derived from at least one selected from the group consisting of 1,9-nonanediamine and 2-methyl-1,8-octanediamine. From the viewpoint of low water absorbency and heat resistance, the aliphatic diamine unit having 7 to 13 carbon atoms is preferably a diamine unit derived from 1,9-nonanediamine or a diamine unit derived from 2-methyl-1,8-octanediamine. In a case where both a diamine unit derived from 1,9-nonanediamine and a diamine unit derived from 2-methyl-1,8-octanediamine are contained as the aliphatic diamine unit having 7 to 13 carbon atoms, a molar ratio thereof is preferably in a range of (diamine unit derived from 1,9-nonanediamine)/(diamine unit derived from 2-methyl-1,8-octanediamine) = 95/5 to 40/60, and more preferably in a range of 90/10 to 50/50.

The diamine unit contains 60 to 100 mol of the aliphatic diamine unit having 7 to 13 carbon atoms with respect to 100 mol% of the diamine unit. From the viewpoint of mechanical properties and heat resistance, the diamine unit preferably contains an aliphatic diamine unit having 7 to 13 carbon atoms in an amount of 70 to 100 mol%, more preferably 80 to 100 mol%, and still more preferably 90 to 100 mol%. The diamine unit may contain 100 mol% of the aliphatic diamine unit having 7 to 13 carbon atoms.

The diamine unit may contain a diamine unit derived from a diamine other than the aliphatic diamine unit as long as the effects of the present invention are not impaired. Examples of the diamine unit derived from the other diamine include a diamine unit derived from at least one selected from the group consisting of an alicyclic diamine and an aromatic diamine.

Examples of the diamine unit derived from an alicyclic diamine include a diamine unit derived from at least one selected from the group consisting of cyclohexanediamine, methylcyclohexanediamine, isophoronediamine, norbornanedimethylamine, and tricyclodecanedimethyldiamine.

Examples of the diamine unit derived from an aromatic diamine include a diamine unit derived from at least one selected from the group consisting of p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenyl ether.

The diamine unit may contain only one kind of diamine unit derived from these other diamines, or may contain two or more kinds thereof.

The content of the diamine unit derived from the other diamine in the diamine unit is less than 40 mol%, preferably 30 mol% or less, more preferably 20 mol% or less, and still more preferably 10 mol% or less with respect to 100 mol% of the diamine unit.

The content of the diamine unit derived from the other diamine in the diamine unit is preferably 0 mol% or more and less than 40 mol%, more preferably 0 mol% or more and 30 mol% or less, still more preferably 0 mol% or more and 20 mol% or less, and yet still more preferably 0 mol% or more and 10 mol% or less with respect to 100 mol% of the diamine unit. The content of the diamine unit derived from the other diamine in the diamine unit may be 0 mol%.

### (Dicarboxylic Acid Unit)

The dicarboxylic acid unit contains 60 to 100 mol% of an aromatic dicarboxylic acid unit with respect to 100 mol% of the dicarboxylic acid unit.

Examples of the aromatic dicarboxylic acid unit include a dicarboxylic acid unit derived from at least one selected from the group consisting of terephthalic acid, isophthalic acid, diphenic acid, 4,4'-biphenyldicarboxylic acid, diphenylmethane-4,4'-dicarboxylic acid, diphenylsulfone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, and 2,5-furandicarboxylic acid.

Only one kind of constituent unit derived from these aromatic dicarboxylic acid units may be contained, or two or more kinds thereof may be contained.

From the viewpoint of mechanical properties, heat resistance, and reactivity with a diamine, the aromatic dicarboxylic acid unit is preferably an aromatic dicarboxylic acid unit derived from terephthalic acid.

The proportion of the aromatic dicarboxylic acid unit contained in the dicarboxylic acid unit contains 60 mol% or more of the aromatic dicarboxylic acid unit with respect to 100 mol% of the dicarboxylic acid unit. From the viewpoint of mechanical properties and heat resistance, the proportion of the aromatic dicarboxylic acid unit is preferably 70 mol% or more, more preferably 80 mol% or more, and still more preferably 90 mol% or more. The proportion of the aromatic dicarboxylic acid unit contained in the dicarboxylic acid unit may be 100 mol%.

The dicarboxylic acid unit preferably contains 70 to 100 mol%, more preferably contains 80 to 100 mol%, and still more preferably contains 90 to 100 mol% of an aromatic dicarboxylic acid unit with respect to 100 mol% of the dicarboxylic acid unit.

The dicarboxylic acid unit may contain a dicarboxylic acid unit derived from a dicarboxylic acid other than the aromatic dicarboxylic acid as long as the effects of the present invention are not impaired. Examples of the other dicarboxylic acid include an aliphatic dicarboxylic acid and an alicyclic dicarboxylic acid.

Examples of the dicarboxylic acid unit derived from an aliphatic dicarboxylic acid include a dicarboxylic acid unit derived from at least one selected from the group consisting of oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the dicarboxylic acid unit derived from an alicyclic dicarboxylic acid include a dicarboxylic acid unit derived from at least one selected from the group consisting of 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

The dicarboxylic acid unit may contain only one kind of dicarboxylic acid unit derived from these other dicarboxylic acids, or may contain two or more kinds thereof.

The content of the dicarboxylic acid unit derived from the other dicarboxylic acid contained in the dicarboxylic acid unit is less than 40 mol%, preferably 30 mol% or less, more preferably 20 mol% or less, and still more preferably 10 mol% or less with respect to 100 mol% of the dicarboxylic acid unit.

The content of the dicarboxylic acid unit derived from the other dicarboxylic acid in the dicarboxylic acid unit is preferably 0 mol% or more and less than 40 mol%, more preferably 0 mol% or more and 30 mol% or less, still more preferably 0 mol% or more and 20 mol% or less, and yet still more preferably 0 mol% or more and 10 mol% or less with respect to 100 mol% of the dicarboxylic acid unit. The content of the diamine unit derived from the other dicarboxylic acid in the dicarboxylic acid unit may be 0 mol%.

The proportion of the diamine unit and the dicarboxylic acid unit (the proportion of the total number of moles of the dicarboxylic acid unit and the diamine unit to the number of moles of all constituent units constituting the polyamide resin) in 100 mol% of the semi-aromatic polyamide resin of the present embodiment is preferably 70 mol% or more, more preferably 80 mol% or more, still more preferably 90 mol% or more, and may be 95 mol% or more, and may also be 100 mol%. When the total proportion of the diamine unit and the dicarboxylic acid unit is within the above range, a semi-aromatic polyamide resin more excellent in mechanical properties and heat resistance can be obtained.

The proportion of the diamine unit and the dicarboxylic acid unit (the proportion of the total number of moles of the dicarboxylic acid unit and the diamine unit to the number of moles of all constituent units constituting the polyamide resin) in 100 mol% of the semi-aromatic polyamide resin of the present embodiment is preferably 70 mol% or more and 100 mol% or less, more preferably 80 mol% or more and 100 mol% or less, still more preferably 90 mol% or more and 100 mol% or less, and may be 95 mol% or more and 100 mol% or less, and may also be 100 mol%.

### (Aminocarboxylic Acid Unit)

The semi-aromatic polyamide resin of the present embodiment may further contain an aminocarboxylic acid unit in addition to the diamine unit and the dicarboxylic acid unit.

Examples of the aminocarboxylic acid unit include an aminocarboxylic acid unit derived from at least one selected from the group consisting of lactams such as caprolactam and lauryl lactam; and aminocarboxylic acids such as 11-aminoundecanoic acid and 12-aminododecanoic acid. The content of the aminocarboxylic acid unit in the semi-aromatic polyamide resin is preferably 30 mol% or less, and more preferably 20 mol% or less, with respect to 100 mol% of the total of the diamine unit and the dicarboxylic acid unit in the semi-aromatic polyamide resin.

The content of the aminocarboxylic acid unit in the semi-aromatic polyamide resin is preferably 0 mol% or more and 30 mol% or less, more preferably 0 mol% or more and 20 mol% or less, still more preferably 0 mol% or more and 10 mol% or less, and yet still more preferably 0 mol% or more and 5 mol% or less, with respect to 100 mol% of the total of the diamine unit and the dicarboxylic acid unit in the semi-aromatic polyamide resin.

### (Polycarboxylic Acid Unit)

The semi-aromatic polyamide resin of the present embodiment can also contain a constituent unit derived from a polycarboxylic acid having a valence of 3 or more, such as trimellitic acid, trimesic acid, or pyromellitic acid, within a range in which melt molding is possible, as long as the effects of the present invention are not impaired.

### (Terminal Blocking Ratio)

In the semi-aromatic polyamide resin of the present embodiment, from the viewpoint of melt stability and hydrolysis resistance, it is preferable that the terminal group of the molecular chain of the semi-aromatic polyamide resin is blocked. For blocking of the terminal group, a terminal blocking agent can be used. Details of the terminal blocking agent will be described later. Further, the ratio of the blocked terminal groups to the total terminal groups in the molecular chain of the semi-aromatic polyamide resin is referred to as terminal blocking ratio. The terminal blocking ratio is preferably 5 mol% or more, and more preferably 10 mol% or more. In addition, from the viewpoint of obtaining a semi-aromatic polyamide resin having a higher molecular weight, the terminal blocking ratio is preferably 40 mol% or less, and more preferably 30 mol% or less. The terminal blocking ratio is preferably 5 to 40 mol%, more preferably 10 to 30 mol%, and still more preferably 10 to 20 mol%.

The terminal blocking ratio of the semi-aromatic polyamide resin can be determined by measuring each of the amount of terminal carboxy groups, the amount of terminal amino groups, and the amount of terminal groups blocked with a terminal blocking agent in the semi-aromatic polyamide resin and using the following Formula (1). In the Formula (1), A represents the total amount of terminal groups (which is usually equal to twice the number of molecules of the semi-aromatic polyamide resin), and B represents the total amount of terminal carboxy groups and terminal amino groups. $Terminal blocking ratio \left(%\right) = \left[\left(A-B\right)/A\right] \times 100$

In the description herein, the amounts of the respective terminal groups of the semi-aromatic polyamide resin of the present embodiment are values obtained by subjecting the semi-aromatic polyamide resin dissolved in deuterated 1,1,1,3,3,3-hexafluoroisopropanol to ¹H-NMR analysis under the conditions of 600 MHz and 50°C, and calculating from the integral values of the characteristic signals of the respective terminal groups. More specifically, it can be determined by the method described in Examples.

### (Inherent Viscosity of Semi-Aromatic Polyamide Resin)

The inherent viscosity ηᵢₙₕ of the semi-aromatic polyamide resin of the present embodiment is 1.6 to 3.0 dL/g. The inherent viscosity ηᵢₙₕ is preferably 1.7 dL/g or more, more preferably 1.8 dL/g or more, and still more preferably 1.9 dL/g or more. When the inherent viscosity ηᵢₙₕ is within the above range, a semi-aromatic polyamide resin having more excellent fatigue resistance can be obtained. In addition, the inherent viscosity ηᵢₙₕ is preferably 2.7 dL/g or less, more preferably 2.5 dL/g or less, and still more preferably 2.3 dL/g or less. When the inherent viscosity ηᵢₙₕ is within the above range, a semi-aromatic polyamide resin excellent in moldability and retention stability can be obtained. The inherent viscosity ηᵢₙₕ is preferably 1.7 to 2.7 dL/g, more preferably 1.7 to 2.5 dL/g, still more preferably 1.8 to 2.5 dL/g, yet still more preferably 1.9 to 2.5 dL/g, and most preferably 1.9 to 2.3 dL/g.

The inherent viscosity ηᵢₙₕ can be determined by measuring the flow-down time of a solution containing concentrated sulfuric acid at a concentration of 0.2 g/dL and a temperature of 30°C as a solvent. More specifically, it can be determined by the method described in Examples.

### (Amount of Terminal Amino Groups)

The amount of terminal amino groups [NH₂] of the semi-aromatic polyamide resin of the present embodiment is 10 to 70 microequivalent/g. The amount of terminal amino groups [NH₂] is preferably 15 microequivalent/g or more, more preferably 20 microequivalent/g or more, still more preferably 30 microequivalent/g or more, and yet still more preferably 40 microequivalent/g or more. When the amount of terminal amino groups [NH₂] is within the above range, the inherent viscosity ηᵢₙₕ indicating the molecular weight of the semi-aromatic polyamide resin falls within a desired range, and thus fatigue resistance is more excellent. In addition, the amount of terminal amino groups [NH₂] is preferably 60 microequivalent/g or less, more preferably 50 microequivalent/g or less, and still more preferably 45 microequivalent/g or less. When the amount of terminal amino groups [NH₂] is within the above range, crosslinking between terminal amino groups during melt processing is suppressed, and a polyamide resin having excellent retention stability can be obtained. The amount of terminal amino groups [NH₂] is preferably 10 to 60 microequivalent/g, more preferably 10 to 50 microequivalent/g, still more preferably 15 to 50 microequivalent/g, and yet still more preferably 15 to 45 microequivalent/g.

### (Amount of Terminal Carboxy Groups)

The amount of terminal carboxy groups [COOH] of the semi-aromatic polyamide resin of the present embodiment is 10 to 90 microequivalent/g. The amount of terminal carboxy groups [COOH] is preferably 20 microequivalent/g or more, more preferably 30 microequivalent/g or more, still more preferably 40 microequivalent/g or more, and yet still more preferably 55 microequivalent/g or more. When the amount of terminal carboxy groups [COOH] is within the above range, the inherent viscosity ηᵢₙₕ indicating the molecular weight of the semi-aromatic polyamide resin falls within a desired range, and thus fatigue resistance is more excellent. In addition, the amount of terminal carboxy groups [COOH] is preferably 85 microequivalent/g or less, and more preferably 80 microequivalent/g or less. When the amount of terminal carboxy groups [COOH] is within the above range, hydrolysis during melt processing is suppressed, and a semi-aromatic polyamide resin having excellent retention stability can be obtained. The amount of terminal carboxy groups [COOH] is preferably 20 to 85 microequivalent/g, more preferably 30 to 80 microequivalent/g, still more preferably 40 to 80 microequivalent/g, and yet still more preferably 55 to 80 microequivalent/g.

In the present embodiment, the amount of terminal amino groups [NH₂] refers to the amount (unit: microequivalent/g) of terminal amino groups contained in 1 g of the semi-aromatic polyamide resin. The amount of terminal carboxy groups [COOH] refers to the amount (unit: microequivalent/g) of terminal carboxy groups contained in 1 g of the semi-aromatic polyamide resin.

In the description herein, the amount of terminal amino groups [NH₂] and the amount of terminal carboxy groups [COOH] of the semi-aromatic polyamide resin of the present embodiment are values obtained by subjecting the semi-aromatic polyamide resin dissolved in deuterated 1,1,1,3,3,3-hexafluoroisopropanol to ¹H-NMR analysis under the conditions of 600 MHz and 50°C, and calculating from the integral values of the characteristic signals of the respective terminal groups. More specifically, it can be determined by the method described in Examples.

The ratio of the amount of terminal amino groups [NH₂] to the amount of terminal carboxy groups [COOH], [NH₂]/[COOH] of the semi-aromatic polyamide resin of the present embodiment is 0.1 or more and less than 1.0. The [NH₂]/[COOH] is preferably 0.2 to 0.9, more preferably 0.2 to 0.8, still more preferably 0.2 to 0.7, and yet still more preferably 0.3 to 0.7. When the [NH₂]/[COOH] is within the above range, the inherent viscosity ηᵢₙₕ indicating the molecular weight of the semi-aromatic polyamide resin falls within a desired range, and thus fatigue resistance is more excellent. In addition, crosslinking between terminal amino groups and hydrolysis during melt processing are suppressed, and a semi-aromatic polyamide resin also having excellent retention stability can be obtained.

### (Weight-Average Molecular Weight)

The weight-average molecular weight of the semi-aromatic polyamide resin of the present embodiment is preferably 40,000 or more, more preferably 45,000 or more, and still more preferably 50,000 or more, from the viewpoint of fatigue resistance. In addition, the weight-average molecular weight of the semi-aromatic polyamide resin is preferably 90,000 or less, more preferably 80,000 or less, and still more preferably 70,000 or less, from the viewpoint of moldability. Accordingly, the weight-average molecular weight of the semi-aromatic polyamide resin is preferably 40,000 to 90,000, more preferably 45,000 to 80,000, and still more preferably 50,000 to 70,000.

### (Reduction Rate of Weight-Average Molecular Weight)

In the semi-aromatic polyamide resin of the present embodiment, the reduction rate of the weight-average molecular weight (hereinafter, also referred to as Mw) before and after melt-kneading is preferably 20% or less. This makes it possible to enhance the retention stability. In the melt-kneading, only the semi-aromatic polyamide resin may be melt-kneaded, or the semi-aromatic polyamide resin may be mixed with other components and melt-kneaded as a composition. The reduction rate of the weight-average molecular weight is calculated by the following Formula (2). In this Formula (2), Mw₀ is the weight-average molecular weight before melt-kneading, and Mw₁ is the weight-average molecular weight after melt-kneading at a cylinder temperature of 320 to 325°C using a twin-screw extruder. $Reduction rate of weight - average molecular weight = \left({Mw}_{0}-{Mw}_{1}\right) \times 100 / {Mw}_{0}$

The reduction rate of the weight-average molecular weight is more preferably 18% or less, and still more preferably 15% or less, from the viewpoint of the mechanical properties after melt-kneading and the appearance of the molded article. Here, the melt-kneading is carried out by using a twin-screw extruder "BTN-32-S2-30-L" manufactured by Research Laboratory of Plastics Technology Co., Ltd. as a twin-screw extruder at a cylinder temperature of 320 to 325°C and a residence time of 1 to 5 minutes, and more specifically, can be carried out by the method described in Examples.

In the description herein, the weight-average molecular weight of the semi-aromatic polyamide resin is a value determined as a molecular weight in terms of standard polymethyl methacrylate using gel permeation chromatography (GPC). More specifically, it can be determined by the method described in Examples.

### (Melting Point)

The melting point of the semi-aromatic polyamide resin of the present embodiment is preferably 250°C or higher, more preferably 280°C or higher, and still more preferably 290°C or higher. When the melting point is within the above range, a semi-aromatic polyamide resin having excellent heat resistance can be obtained. The upper limit of the melting point of the semi-aromatic polyamide resin is not particularly limited, but is preferably 330°C or lower, more preferably 320°C or lower, and still more preferably 310°C or lower in consideration of the moldability and the like. The melting point of the semi-aromatic polyamide resin is preferably 250 to 330°C, more preferably 280 to 320°C, still more preferably 290 to 320°C, and yet still more preferably 290 to 310°C.

In the description herein, the melting point of the semi-aromatic polyamide resin is a value determined as the peak temperature of an endothermic peak that appears when the temperature is raised at a rate of 10°C/min using a differential scanning calorimetry (DSC) analyzer. More specifically, it can be determined by the method described in Examples.

### (Quantity of Heat of Fusion)

The semi-aromatic polyamide resin of the present embodiment preferably has a quantity of heat of fusion ΔHm of 20 mJ/mg or more, more preferably 30 mJ/mg or more, and still more preferably 40 mJ/mg or more. When the quantity of heat of fusion ΔHm is within the above range, the crystallinity of the semi-aromatic polyamide resin becomes high, and a semi-aromatic polyamide resin excellent in rigidity and wear resistance can be obtained. The quantity of heat of fusion ΔHm of the semi-aromatic polyamide resin is preferably as high as possible, but is preferably 80 mJ/mg or less, more preferably 70 mJ/mg or less, and still more preferably 60 mJ/mg or less from the viewpoint of moldability and the like. The quantity of heat of fusion ΔHm is preferably 20 to 80 mJ/mg, more preferably 30 to 70 mJ/mg, still more preferably 30 to 60 mJ/mg, yet still more preferably 40 to 60 mJ/mg, and even yet still more preferably 40 to 50 mJ/mg.

In the description herein, the quantity of heat of fusion ΔHm of the semi-aromatic polyamide resin is a value determined as the peak area of an endothermic peak that appears when the temperature is raised at a rate of 10°C/min using a differential scanning calorimetry (DSC) analyzer. More specifically, it can be determined by the method described in Examples.

### (Method for Producing Semi-Aromatic Polyamide Resin)

The method for producing a semi-aromatic polyamide resin of the present embodiment preferably includes a first reaction step of subjecting a raw material containing an aliphatic diamine, an aromatic dicarboxylic acid, and a terminal blocking agent to a polycondensation reaction to obtain a primary polycondensation reaction product, and a second reaction step of subjecting the primary polycondensation reaction product to a solid phase polymerization to obtain the semi-aromatic polyamide resin, in which a ratio (x/y) of a number of moles of amino groups (x) to a number of moles of carboxy groups (y) contained in the raw material is more than 1.010 and 1.030 or less, and an amount of the terminal blocking agent contained in the raw material is 0.1 to 1.5 mol% with respect to 100 mol% of the diamine contained in the raw material.

### (Raw Material)

In the first reaction step, the raw material containing an aliphatic diamine, an aromatic dicarboxylic acid, and a terminal blocking agent is subjected to melt polymerization and polycondensation reaction. A preparation step of preparing the raw material may be provided before the first reaction step. The raw material preferably contains an aliphatic diamine, an aromatic dicarboxylic acid, and a terminal blocking agent. Further, the raw material preferably contains a catalyst and other components as required. At this time, the ratio (x/y) of the number of moles of amino groups (x) to the number of moles of carboxy groups (y) contained in the raw material is more than 1.01 and 1.03 or less, preferably 1.015 to 1.025, and more preferably 1.02 to 1.03. When the ratio (x/y) is within the above range, it is possible to suppress the loss of the molar balance of the raw material due to volatilization of at least one of the aliphatic diamine and the aromatic dicarboxylic acid, and it becomes easy to produce a semi-aromatic polyamide resin having an inherent viscosity ηᵢₙₕ and an amount of each terminal group within desired ranges.

The number of moles of amino groups (x) is the sum of the numbers of moles of amino groups derived from the aliphatic diamine, the terminal blocking agent having an amino group, and other components. The number of moles of carboxy groups (y) is the sum of the numbers of moles of carboxy groups derived from the aromatic carboxylic acid, the terminal blocking agent having a carboxy group, and other components.

### (Terminal Blocking Agent)

When the semi-aromatic polyamide resin of the present embodiment is produced, the raw material preferably contains a terminal blocking agent.

The amount of the terminal blocking agent contained in the raw material is preferably 5.0 mol% or less, more preferably 3.0 mol% or less, and still more preferably 1.5 mol% or less, with respect to 100 mol% of the diamine unit contained in the raw material. In addition, the content is preferably 0.1 mol% or more, more preferably 0.5 mol% or more, and still more preferably 0.7 mol% or more. When the content of the terminal blocking agent is within the above range, a high-molecular-weight polyamide resin having more excellent mechanical properties can be obtained. The amount of the terminal blocking agent is preferably 0.1 to 5.0 mol%, more preferably 0.5 to 3.0 mol%, and still more preferably 0.7 to 1.5 mol% with respect to 100 mol% of the diamine unit contained in the raw material.

As the terminal blocking agent, a monofunctional compound having reactivity with an amino group or a carboxy group at the terminal of the molecular chain of the semi-aromatic polyamide resin can be used. Specific examples thereof include monocarboxylic acids, acid anhydrides, monoisocyanates, monoacid halides, monoesters, monoalcohols, and monoamines. From the viewpoint of reactivity and stability of terminal blocking, the terminal blocking agent for the amino group is preferably a monocarboxylic acid. The terminal blocking agent for the carboxy group is preferably a monoamine. From the viewpoint of ease of handling, a monocarboxylic acid is more preferable as the terminal blocking agent.

The monocarboxylic acid used as the terminal blocking agent is not particularly limited as long as it has reactivity with an amino group, and examples thereof include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid, and phenylacetic acid; and an arbitrary mixture thereof. Among these, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable from the points of reactivity, stability of blocked terminals, and a price.

The monoamine used as the terminal blocking agent is not particularly limited as long as it has reactivity with a carboxy group, and examples thereof include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and an arbitrary mixture thereof. Among these, at least one selected from the group consisting of butylamine, hexylamine, octylamine, decylamine, stearylamine, cyclohexylamine, and aniline is preferable from the points of reactivity, a high boiling point, stability of blocked terminals, and a price.

### (Catalyst)

When the semi-aromatic polyamide resin of the present embodiment is produced, a catalyst can be added.

The amount of the catalyst used is preferably 0.01% by mass or more and more preferably 0.05% by mass or more, and is preferably 1.0% by mass or less and more preferably 0.5% by mass or less, based on the total mass of the raw material. In a case where the amount of the catalyst used is equal to or greater than the lower limit described above, polymerization satisfactorily proceeds. In a case where the amount is equal to or less than the upper limit described above, impurities derived from the catalyst are less likely to be generated, and for example, when a polyamide resin composition containing the semi-aromatic polyamide resin of the present invention is subjected to extrusion molding, problems caused by the impurities can be prevented. The amount of the catalyst used is preferably 0.01 to 1.0% by mass, and more preferably 0.05 to 0.5% by mass, based on the total mass of the raw material.

As the catalyst, phosphoric acid, phosphorous acid, hypophosphorous acid, salts or esters thereof, and the like can be used. Examples of the aforementioned salts or esters include a salt of phosphoric acid, phosphorus acid, or hypophosphorous acid with a metal such as potassium, sodium, magnesium, vanadium, calcium, zinc, cobalt, manganese, tin, tungsten, germanium, titanium, or antimony; an ammonium salt of phosphoric acid, phosphorus acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorus acid, or hypophosphorous acid.

### (First Reaction Step)

In the first reaction step, a primary polycondensation reaction product is obtained. Specifically, the raw material containing an aliphatic diamine, an aromatic dicarboxylic acid, and a terminal blocking agent is subjected to a polycondensation reaction by melt polymerization to obtain a primary polycondensation reaction product. As long as the raw material contains the aliphatic diamine, the aromatic dicarboxylic acid, and the terminal blocking agent, they may be mixed all at once, or a part of them may be separately added and mixed later. The polycondensation reaction is preferably carried out by heat polymerization. The polymerization temperature is preferably 200 to 270°C, and more preferably 240 to 260°C. When the polymerization temperature is within the above range, the degree of polymerization of the primary polycondensation reaction product is increased, and it is possible to suppress the occurrence of fusion and aggregation of the polycondensation reaction product during the solid phase polymerization in the subsequent step and the loss of the molar balance between the dicarboxylic acid component and the diamine component.

### (Second Reaction Step)

In the second reaction step, a semi-aromatic polyamide resin is obtained. Specifically, the primary polycondensation reaction product may be subjected to a solid phase polymerization to obtain the semi-aromatic polyamide resin. As the method of solid phase polymerization, the solid phase polymerization of the primary polycondensation reaction product is preferably performed at a temperature of 200°C or higher and lower than the melting point of the semi-aromatic polyamide resin. The solid phase polymerization temperature is a reaction temperature at the time of solid phase polymerization, and is more preferably 215°C or higher, and still more preferably 230°C or higher. The solid phase polymerization method is preferably heating and stirring in which stirring is performed while heating. The method of heating and stirring may be a method capable of uniformly heating and stirring, and for example, a horizontal heating and stirring apparatus can be used.

When the solid phase polymerization temperature is lower than 200°C, a long time is required to reach a desired molecular weight (inherent viscosity ηᵢₙₕ), and productivity is deteriorated. On the other hand, when the solid phase polymerization temperature is equal to or higher than the melting point of the primary polycondensation reaction product, the primary polycondensation reaction product is easily fused, aggregated, adhered to the wall of the vessel, or colored during the solid phase polymerization, or a molar balance is easily lost due to volatilization of a dicarboxylic acid component and a diamine component constituting the primary polycondensation product. Therefore, the solid phase polymerization of the primary polycondensation reaction product is preferably carried out in a temperature range from a temperature lower than the melting point of the primary polycondensation product by 100°C to a temperature lower than that by 40°C.

In addition, from the viewpoint of suppressing deterioration of the semi-aromatic polyamide resin due to oxygen at high temperature and obtaining a high-quality, specifically, high-molecular-weight semi-aromatic polyamide resin in which yellowing of the resin itself is suppressed and which has a narrow molecular weight distribution, the solid phase polymerization of the primary polycondensation reaction product is preferably performed under reduced pressure or in an inert gas flow.

### [Polyamide Resin Composition]

As one of the present embodiments, the semi-aromatic polyamide resin may be a polyamide resin composition. The polyamide resin composition is obtained by blending at least the semi-aromatic polyamide resin.

The polyamide resin composition preferably contains the semi-aromatic polyamide resin in an amount of 50% by mass or more and less than 100% by mass, more preferably 60 to 99.5% by mass, still more preferably 70 to 99% by mass, and yet still more preferably 80 to 99% by mass. When the content of the semi-aromatic polyamide resin is within the above range, a polyamide resin composition excellent in retention stability during molding and heat aging resistance can be obtained.

### (Crystal Nucleating Agent)

The polyamide resin composition of the present embodiment preferably contains the semi-aromatic polyamide resin and a crystal nucleating agent.

The polyamide resin composition preferably contains a crystal nucleating agent in an amount of 0.01 to 10 parts by mass, more preferably 0.1 to 5 parts by mass, still more preferably 1 to 5 parts by mass, and yet still more preferably 1 to 3 parts by mass, with respect to 100 parts by mass of the semi-aromatic polyamide resin. When the content of the crystal nucleating agent is within the above range, a polyamide resin composition having excellent mechanical strength and wear resistance can be obtained.

Examples of the crystal nucleating agent include metal oxides such as zinc oxide, magnesium oxide, iron oxide, antimony oxide, titanium oxide, alumina, and silica; inorganic salts such as sodium carbonate, potassium carbonate, calcium carbonate, zinc carbonate, magnesium carbonate, calcium silicate, lead silicate, magnesium silicate, calcium phosphate, lead phosphate, calcium sulfate, and barium sulfate; clays such as talc, kaolin, mica, and acid clay; organic acid salts such as calcium oxalate, calcium benzoate, magnesium stearate, and zinc salicylate; high-melting point polymers such as polyamide 6T and polyamide 46; powder simple substances such as zinc powder, aluminum powder, graphite powder, and carbon black; aluminum p-t-butylbenzoate; sodium bis(4-t-butylphenyl)phosphate; sodium 2,2'-methylenebis(4,6-di-t-butylphenyl)phosphate; and hydroxyaluminum di(p-t-butylbenzoate). These crystal nucleating agents may be used alone or in combination of two or more kinds thereof.

Among these, talc is preferable from the viewpoint of more excellent mechanical strength and wear resistance.

The average particle diameter of the crystal nucleating agent is preferably 0.01 to 20 µm or less, more preferably 0.5 to 15 µm or less, and still more preferably 1 to 10 µm or less. When the average particle diameter of the crystal nucleating agent is within the above range, crystal nucleation of the semi-aromatic polyamide resin is promoted, and a polyamide resin composition having excellent mechanical strength and wear resistance can be obtained.

The average particle diameter of the crystal nucleating agent can be obtained by the following method. A molded article made of a polyamide resin composition containing a crystal nucleating agent is dissolved in a solvent such as formic acid in which polyamide is soluble. The obtained insoluble component is observed with an optical microscope, a scanning electron microscope, or the like, and the average value of the maximum Feret diameters of 100 or more crystal nucleating agents can be taken as the average particle diameter. The Feret diameter is a distance between two parallel straight lines when the crystal nucleating agent is sandwiched between the two straight lines.

The crystal nucleating agent may be treated with a silane coupling agent, a titanium coupling agent, or the like, if necessary. Examples of the silane coupling agent include, but are not limited to, aminosilane-based coupling agents such as γ-aminopropyltriethoxysilane, γ-aminopropyltrimethoxysilane, and N-β-(aminoethyl)-γ-aminopropylmethyldimethoxysilane; mercaptosilane-based coupling agents such as γ-mercaptopropyltrimethoxysilane and γ-mercaptopropyltriethoxysilane; epoxysilane-based coupling agents; and vinylsilane-based coupling agents. These silane coupling agents may be used alone or in combination of two or more kinds thereof.

### (Antioxidant)

The polyamide resin composition of the present embodiment preferably contains the semi-aromatic polyamide resin and an antioxidant.

The polyamide resin composition preferably contains an antioxidant in an amount of 0.01 to 5 parts by mass, more preferably 0.05 to 3 parts by mass, and still more preferably 0.1 to 2 parts by mass, with respect to 100 parts by mass of the semi-aromatic polyamide resin. When the content of the antioxidant is within the above range, a polyamide resin composition excellent in retention stability during molding and heat aging resistance can be obtained.

Examples of the antioxidant include organic antioxidants such as phenol-based antioxidants, phosphorus-based antioxidants, sulfur-based antioxidants, and amine-based antioxidants; and inorganic antioxidants such as copper compounds and halides.

The antioxidant may be used alone or in combination of two or more kinds thereof. Among the antioxidants, from the viewpoint of excellent heat aging resistance, at least one selected from a phenol-based antioxidant, an amine-based antioxidant, and a combination of a copper compound and a halide is preferable.

Examples of the phenol-based antioxidant include 2,2-thio-diethylenebis[3-(3,5-di-tert-butyl-4-hydroxyphenyl)propionate], N,N'-hexane-1,6-diylbis[3-(3,5-di-tert-butyl-4-hydroxyphenylpropionamide)], pentaerythrityl-tetrakis[3-(3,5-di-tert-butyl-4-hydroxyphenyl)propionate], N,N'-hexamethylenebis(3,5-di-tert-butyl-4-hydroxyphenyl)propionamide, triethyleneglycolbis(3-tert-butyl-4-hydroxy-5-methylphenyl)propionate, hexamethylenebis(3-(3,5-di-tert-butyl-4-hydroxyphenyl)propionate), 3,9-bis{2-[3-(3-tert-butyl-4-hydroxy-5-methylphenyl)propionyloxy]-1,1-dimethylethyl}-2,4,8,10-tetraoxaspiro[5.5]undecane, tris(3,5-di-tert-butyl-4-hydroxybenzyl)isocyanurate, 3,5-di-tert-butyl-4-hydroxybenzylphosphonate-diethyl ester, 1,3,5-trimethyl-2,4,6-tris(3,5-di-tert-butyl-4-hydroxybenzyl)benzene, and 1,3,5-tris(4-tert-butyl-3-hydroxy-2,6-dimethylbenzyl)isocyanuric acid.

The phenol-based antioxidant is preferably at least one selected from N,N'-hexamethylenebis(3,5-di-tert-butyl-4-hydroxyphenyl)propionamide and 3,9-bis{2-[3-(3-tert-butyl-4-hydroxy-5-methylphenyl)propionyloxy]-1,1-dimethylethyl}-2,4,8,10-tetraoxaspiro[5.5]undecane from the viewpoint of the heat resistance of the polyamide resin composition to be obtained.

Examples of the phosphorus-based antioxidant include monosodium phosphate, disodium phosphate, trisodium phosphate, sodium phosphite, calcium phosphite, magnesium phosphite, manganese phosphite, pentaerythritol type phosphite compound, trioctyl phosphite, trilauryl phosphite, octyl diphenyl phosphite, triisodecyl phosphite, phenyl diisodecyl phosphite, phenyl di(tridecyl) phosphite, diphenyl isooctyl phosphite, diphenyl isodecyl phosphite, diphenyl (tridecyl) phosphite, triphenyl phosphite, trioctadecyl phosphite, tridecyl phosphite, tri(nonylphenyl) phosphite, tris(2,4-di-tert-butylphenyl) phosphite, tris(2,4-di-tert-butyl-5-methylphenyl) phosphite, tris(butoxyethyl) phosphite, 4,4'-butylidene-bis(3-methyl-6-tert-butylphenyl-tetratridecyl) diphosphite, tetra(C12 to C15 mixed alkyl)-4,4'-isopropylidene diphenyl diphosphite, 4,4'-isopropylidene bis(2-tert-butylphenyl)·di(nonylphenyl) phosphite, tris(biphenyl) phosphite, tetra(tridecyl)-1,1,3-tris(2-methyl-5-tert-butyl-4-hydroxyphenyl)butane diphosphite, tetra(tridecyl)-4,4'-butylidenebis(3-methyl-6-tert-butylphenyl) diphosphite, tetra(C1 to C15 mixed alkyl)-4,4'-isopropylidene diphenyl diphosphite, tris(mono, di mixed nonylphenyl) phosphite, 4,4'-isopropylidene bis(2-tert-butylphenyl)·di(nonylphenyl) phosphite, 9,10-dihydro-9-oxa-10-phosphaphenanthrene-10-oxide, tris(3,5-di-tert-butyl-4-hydroxyphenyl) phosphite, hydrogenated-4,4'-isopropylidene diphenyl polyphosphite, bis(octylphenyl)·bis(4,4'-butylidene bis(3-methyl-6-tert-butylphenyl))-1,6-hexanol diphosphite, hexatridecyl-1,1,3-tris(2-methyl-4-hydroxy-5-tert-butylphenyl) diphosphite, tris(4,4'-isopropylidene bis(2-tert-butylphenyl)) phosphite, tris(1,3-stearoyloxyisopropyl) phosphite, 2,2-methylenebis(4, 6-di-tert-butylphenyl) octyl phosphite, 2,2-methylenebis(3-methyl-4,6-di-tert-butylphenyl)-2-ethylhexyl phosphite, tetrakis(2,4-di-tert-butyl-5-methylphenyl)-4,4'-biphenylene diphosphite, tetrakis(2,4-di-tert-butylphenyl)-4,4'-biphenylene diphosphite, and 6-[3-(3-tert-butyl-4-hydroxy-5-methylphenyl)propoxy]-2,4,8,10-tetra-tert-butyldibenzo[d,f][1,3,2]-dioxaphosphepin.

Examples of the sulfur-based antioxidant include distearyl 3,3'-thiodipropionate, pentaerythrityl tetrakis(3-laurylthiopropionate), 2-mercaptobenzimidazole, didodecyl 3,3'-thiodipropionate, ditridecyl 3,4'-thiodipropionate, and 2,2-bis[[3-(dodecylthio)-1-oxopropoxy]methyl]-1,3-propanediyl ester.

Examples of the amine-based antioxidant include 4,4'-bis(α,α-dimethylbenzyl) diphenylamine (e.g., "Nocrac CD" manufactured by Ouchi Shinko Chemical Industrial Co., Ltd., and "Naugard 445" manufactured by Addivant Japan G.K.), N,N'-di-2-naphthyl-p-phenylenediamine (e.g., "Nocrac White" manufactured by Ouchi Shinko Chemical Industrial Co., Ltd.), N,N'-diphenyl-p-phenylenediamine (e.g., "Nocrac DP" manufactured by Ouchi Shinko Chemical Industrial Co., Ltd.), N-phenyl-1-naphthylamine (e.g., "Nocrac PA" manufactured by Ouchi Shinko Chemical Industrial Co., Ltd.), N-phenyl-N'-isopropyl-p-phenylenediamine (e.g., "Nocrac 810-NA" manufactured by Ouchi Shinko Chemical Industrial Co., Ltd.), N-phenyl-N'-(1,3-dimethylbutyl)-p-phenylenediamine (e.g., "Nocrac 6C" manufactured by Ouchi Shinko Chemical Industrial Co., Ltd.), N-phenyl-N'-(3-methacryloyloxy-2-hydroxypropyl)-p-phenylenediamine (e.g., "Nocrac G-1" manufactured by Ouchi Shinko Chemical Industrial Co., Ltd.), 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl) carbonate, bis(2,2,6,6-tetramethyl-4-piperidyl) oxalate, bis(2,2,6,6-tetramethyl-4-piperidyl) malonate, bis(2,2,6,6-tetramethyl-4-piperidyl) sebacate, bis(2,2,6,6-tetramethyl-4-piperidyl) adipate, bis(2,2,6,6-tetramethyl-4-piperidyl) terephthalate, 1,2-bis(2,2,6,6-tetramethyl-4-piperidyloxy) ethane, α,α'-bis(2,2,6,6-tetramethyl-4-piperidyloxy)-p-xylene, bis(2,2,6,6-tetramethyl-4-piperidyl) tolylene-2,4-dicarbamate, bis(2,2,6,6-tetramethyl-4-piperidyl) hexamethylene-1,6-dicarbamate, tris(2,2,6,6-tetramethyl-4-piperidyl) benzene-1,3,5-tricarboxylate, tris(2,2,6,6-tetramethyl-4-piperidyl) benzene-1,3,4-tricarboxylate, 1-[2-{3-(3,5-di-tert-butyl-4-hydroxyphenyl)propionyloxy } butyl]-4-[3-(3,5-di-tert-butyl-4-hydroxyphenyl)propionyloxy] 2,2,6,6-tetramethylpiperidine, and a condensate of 1,2,3,4-butanetetracarboxylic acid, 1,2,2,6,6-pentamethyl-4-piperidinol and β,β,β',β'-tetramethyl-3,9-[2,4,8,10-tetraoxaspiro[5.5]undecane]diethanol.

The amine-based antioxidant is preferably 4,4'-bis(α,α-dimethylbenzyl) diphenylamine from the viewpoint of the heat resistance of the polyamide resin composition to be obtained.

Examples of the copper compound include copper halide, copper acetate, copper propionate, copper benzoate, copper adipate, copper terephthalate, copper isophthalate, copper salicylate, copper nicotinate, copper stearate, and copper complex salts coordinated to a chelating agent such as ethylenediamine and ethylenediaminetetraacetic acid. Examples of the copper halide include copper iodide; copper bromides such as cuprous bromide and cupric bromide; and copper chlorides such as cuprous chloride. Among these copper compounds, at least one selected from the group consisting of copper halide and copper acetate is preferable, at least one selected from the group consisting of copper iodide, copper bromide, copper chloride, and copper acetate is more preferable, and at least one selected from the group consisting of copper iodide, copper bromide, and copper acetate is still more preferable, from the viewpoint that the copper compounds have excellent heat aging resistance and are capable of suppressing metal corrosion of a screw or a cylinder portion during extrusion.

As the halide, a halide that does not correspond to the copper compound can be used, and a salt of a metal element of Group 1 or Group 2 of the Periodic Table and a halogen is preferable. Examples thereof include potassium iodide, potassium bromide, potassium chloride, sodium iodide, and sodium chloride. Among these, from the viewpoint that the polyamide resin composition to be obtained has excellent high-temperature heat resistance such as heat aging resistance and is capable of suppressing metal corrosion, at least one selected from the group consisting of potassium iodide and potassium bromide is preferable, and potassium iodide is more preferable.

The copper compound and the halide are preferably used in combination from the viewpoint that the polyamide resin composition to be obtained is excellent in high-temperature heat resistance such as heat aging resistance.

The polyamide resin composition of the present embodiment may contain a semi-aromatic polyamide resin and at least one selected from the group consisting of a crystal nucleating agent and an antioxidant.

### (Slidability improver)

The polyamide resin composition of the present embodiment preferably contains a slidability improver. The polyamide resin composition preferably contains 0.01 to 10 parts by mass, more preferably contains 0.05 to 7 parts by mass, still more preferably contains 0.1 to 5 parts by mass, and yet still more preferably contains 1 to 4 parts by mass of a slidability improver with respect to 100 parts by mass of the semi-aromatic polyamide resin. This makes it possible to enhance the slidability of a molded body made of the polyamide resin composition.

Examples of the slidability improver include fluororesins such as polytetrafluoroethylene, a polytetrafluoroethylene-perfluoroalkoxyethylene copolymer, and a polytetrafluoroethylene-polyhexafluoropropylene copolymer; polyolefins such as (high molecular weight) polyethylene, oxidized polyethylene, acid-modified (ultrahigh molecular weight) polyethylene, polypropylene, acid-modified polypropylene, copolymerized polyolefin, and acid-modified copolymerized polyolefin; silicones such as polydimethylsiloxane, polymethylphenylsiloxane, amino-modified polydimethylsiloxane, epoxy-modified polydimethylsiloxane, alcohol-modified polydimethylsiloxane, carboxy-modified polydimethylsiloxane, and fluorine-modified polydimethylsiloxane; layered inorganic compounds such as graphite and molybdenum disulfide; inorganic fibers such as glass fiber, potassium titanate whisker, zinc oxide whisker, and boronic acid whisker; organic fibers such as LCP fiber, aramid fiber, and carbon fiber; inorganic particles such as alumina, talc, and silica; phosphates such as metaphosphate, pyrophosphate, calcium phosphate, calcium hydrogen phosphate, barium phosphate, lithium phosphate, calcium metaphosphate, and zinc pyrophosphate; mineral oils such as spindle oil, turbine oil, machine oil, and dynamo oil; and montanic acid salts such as calcium montanate. These slidability improvers may be used alone or in combination of two or more kinds thereof.

From the viewpoint that the effect of reducing the amount of wear and the coefficient of friction is large among the above-mentioned slidability improvers, fluororesin, oxidized polyethylene, acid-modified (ultrahigh molecular weight) polyethylene, acid-modified copolymerized polyolefin, molybdenum disulfide, and aramid fiber are preferable.

The polyamide resin composition of the present embodiment preferably contains a semi-aromatic polyamide resin and at least one selected from the group consisting of a crystal nucleating agent, an antioxidant, and a slidability improver. Also in this case, it can be contained in the above-mentioned preferred content.

### (Other Additives)

The polyamide resin composition of the present embodiment may contain other additives, if necessary. Examples of the other additives include a lubricant, an inorganic filler, an impact modifier, a release agent, a colorant, a plasticizer, an ultraviolet absorber, a light stabilizer, an oxygen absorber, a hydrogen sulfide adsorbent, a flame retardant, a flame retardant aid, an antistatic agent, a crystallization retarder, and an organic fibrous filler.

The content of the other additives is not particularly limited as long as the effects of the present invention are not impaired, but is preferably 0.01 to 200 parts by mass, and more preferably 0.02 to 100 parts by mass, with respect to 100 parts by mass of the semi-aromatic polyamide resin.

The content of the lubricant is preferably 0.01 to 10 parts by mass, more preferably 0.05 to 5 parts by mass, and still more preferably 0.1 to 3 parts by mass with respect to 100 parts by mass of the semi-aromatic polyamide resin. This makes it possible to enhance the fluidity of the polyamide resin composition and the appearance and mold releasability of a molded body made of the polyamide resin composition.

Examples of the lubricant include: higher fatty acids having 8 or more carbon atoms, such as stearic acid, palmitic acid, behenic acid, erucic acid, oleic acid, lauric acid, and montanoic acid; metallic salts of higher fatty acids, such as calcium stearate, aluminum stearate, zinc stearate, magnesium stearate, calcium montanoate, sodium montanoate, aluminum montanoate, zinc montanoate, magnesium montanoate, calcium behenate, sodium behenate, zinc behenate, calcium laurate, zinc laurate, and calcium palmitate; esters of higher fatty acids, such as stearyl alcohol, behenyl alcohol, and lauryl alcohol; amides of higher fatty acids, such as stearic acid amide, oleic acid amide, erucic acid amide, ethylene bisstearamide, ethylene bisoleamide, N-stearyl stearamide, and N-stearyl erucamide; and polyolefins, such as polyethylene, oxidized polyethylene, acid-modified polyethylene, polypropylene, and acid-modified polypropylene. These lubricants may be used alone or in combination of two or more kinds thereof.

Among the lubricants, metal stearate, metal montanate, ethylene bisstearamide, and polyolefin are preferable from the viewpoint of excellent heat resistance and moldability.

Examples of the inorganic filler include fibrous fillers such as glass fibers, carbon fibers, calcium silicate fibers, potassium titanate fibers, aluminum borate fibers, and wollastonite; glass flakes, silicon nitride, hydrotalcite zeolite, boehmite, aluminum hydroxide, calcium silicate, sodium aluminosilicate, carbon nanotubes, graphene, brass, copper, silver, nickel, iron, calcium fluoride, montmorillonite, swelling fluorine mica, and apatite. These inorganic fillers may be used alone or in combination of two or more kinds thereof.

Among the inorganic fillers, at least one selected from fibrous fillers is preferable from the viewpoint of excellent moldability and mechanical strength.

As another aspect, the polyamide resin composition of the present embodiment is a polyamide resin composition containing a semi-aromatic polyamide resin having a diamine unit and a dicarboxylic acid unit, in which the diamine unit contains 60 to 100 mol% of an aliphatic diamine unit having 7 to 13 carbon atoms with respect to 100 mol% of the diamine unit, and the dicarboxylic acid unit contains 60 to 100 mol% of an aromatic dicarboxylic acid unit with respect to 100 mol% of the carboxylic acid unit. The semi-aromatic polyamide resin has a weight-average molecular weight (Mw) of 40,000 to 90,000 in terms of polymethyl methacrylate as measured by gel permeation chromatography (GPC), an amount of terminal amino groups [NH₂] of 10 to 70 microequivalent/g, an amount of terminal carboxy groups [COOH] of 10 to 90 microequivalent/g, and a ratio of the amount of terminal amino groups [NH₂] to the amount of terminal carboxy groups [COOH], [NH₂]/[COOH], of 0.1 or more and less than 1.0.

A preferred aspect of the semi-aromatic polyamide resin contained in the polyamide resin composition of the present embodiment, which is another aspect, is the same as the preferred aspect described in [Semi-Aromatic Polyamide Resin] described above.

However, the amount of terminal amino groups [NH₂] and the amount of terminal carboxy groups [COOH] in the semi-aromatic polyamide resin contained in the polyamide resin composition of the present embodiment as another aspect are values calculated by a titration method. More specifically, the amount of terminal amino groups [NH₂] is a value calculated by titration using a 0.01 or 0.1 N HCl aqueous solution with thymol blue as an indicator, and the amount of terminal carboxy groups [COOH] is a value calculated by titration using a 0.01 or 0.1 N potassium hydroxide/ethanol solution with a potentiometric titrator. More further specifically, it can be determined by the method described in Examples.

The polyamide resin composition of the present embodiment as another aspect preferably contains at least one selected from the group consisting of a crystal nucleating agent, an antioxidant, a slidability improver, and a lubricant. In addition, the polyamide resin composition of the present embodiment as another aspect preferably contains 0.01 to 10 parts by mass, more preferably 0.1 to 10 parts by mass, and still more preferably 0.1 to 8 parts by mass of at least one selected from the group consisting of the crystal nucleating agent, the antioxidant, the slidability improver, and the lubricant with respect to 100 parts by mass of the semi-aromatic polyamide resin. In addition, the polyamide resin composition of the present embodiment as another aspect preferably contains 0.01 to 10 parts by mass, more preferably 0.1 to 10 parts by mass, still more preferably 0.1 to 8 parts by mass, and yet still more preferably 0.2 to 8 parts by mass in total of the crystal nucleating agent, the antioxidant, the slidability improver, and the lubricant with respect to 100 parts by mass of the semi-aromatic polyamide resin. This makes it possible to enhance the slidability of a molded body made of the polyamide resin composition.

Preferred aspects of the crystal nucleating agent, the antioxidant, the slidability improver, the lubricant, and other additives contained in the polyamide resin composition of the present embodiment as another aspect are the same as those of the polyamide resin composition of the present embodiment described above.

### (Fatigue Resistance)

The polyamide resin composition of the present embodiment is excellent in fatigue resistance by containing the semi-aromatic polyamide resin. The fatigue resistance of the polyamide resin composition can be evaluated by the number of repetitions until fatigue failure obtained in a plane bending fatigue test. The number of repetitions until fatigue failure of the polyamide resin composition of the present embodiment can be measured by the following method. To be specific, the composition is injection-molded to prepare a Type-I test piece I-20 described in JIS K7119 (1972). Using this test piece, a plane bending fatigue test is performed in accordance with JIS K7119 (1972). The plane bending fatigue test was conducted under the conditions of a chuck-to-chuck spacing of 30 mm, an ambient temperature of 23°C, a load of 40 MPa, a load repetition rate of 1800 cycles per minute, and a stress mode of completely reversed plane bending. Thus, the number of repetitions until fatigue failure is obtained. The number of repetitions until fatigue failure of the polyamide resin composition of the present embodiment is preferably 5.0 × 10⁵ cycles or more, and more preferably 1.0 × 10⁶ cycles or more. More specifically, the number of repetitions can be determined by the method described in Examples.

### (Water Absorbency)

The polyamide resin composition of the present embodiment has low water absorbency by containing the semi-aromatic polyamide resin. The water absorbency can be evaluated by the water absorption rate of the polyamide resin composition. Type-I test piece I-20 (3 mm thickness) described in JIS K7119 (1972) is prepared by injection molding the polyamide resin composition, and the water absorption rate can be calculated from the amount of water absorption before and after immersion in water at 23°C for 168 hours. The water absorption rate is preferably 1.0% or less, more preferably 0.7% or less, and still more preferably 0.5% or less. The water absorption rate can be determined by a method using a test piece obtained by injection-molding the polyamide resin composition using an 80-ton injection molding machine manufactured by Nissei Plastic Industrial Co., Ltd. under the conditions of a cylinder temperature of 320°C and a mold temperature of 140°C, and more specifically, by the method described in Examples.

### (Slidability)

The polyamide resin composition of the present embodiment contains the semi-aromatic polyamide resin, and further contains at least one selected from the group consisting of the crystal nucleating agent and the slidability improver, thereby having excellent slidability. The slidability of the polyamide resin composition can be evaluated by a wear amount (mg) or a coefficient of kinetic friction obtained by a sliding wear test. The wear amount and the coefficient of kinetic friction of the polyamide resin composition of the present embodiment can be measured by the following method. A square plate test piece having a thickness of 3 mm is prepared by injection molding the composition. Using this test piece, a sliding wear test is performed in accordance with JIS K7218 (1986), A method. The conditions of the sliding wear test are 23°C, surface pressure 10 kg/cm², sliding speed 50 cm/sec, and mating member S45C. Thus, the wear amount and the coefficient of kinetic friction are obtained. The wear amount of the polyamide resin composition of the present embodiment is preferably as low as possible, and is preferably 250 mg or less, more preferably 200 mg or less, and still more preferably 150 mg or less. The coefficient of kinetic friction of the polyamide resin composition of the present embodiment is preferably 0.5 or less, and more preferably 0.45 or less. As the test piece, a test piece obtained by injection-molding the polyamide resin composition using an 80-ton injection molding machine manufactured by Nissei Plastic Industrial Co., Ltd. under the conditions of a cylinder temperature of 320°C and a mold temperature of 140°C is used. More specifically, the wear amount and the coefficient of kinetic friction can be determined by the methods described in Examples.

### (Method for Producing Polyamide Resin Composition)

The method for producing the polyamide resin composition is not particularly limited, and a method capable of uniformly mixing the semi-aromatic polyamide resin, the crystal nucleating agent and/or the antioxidant as necessary, and other additives as necessary can be preferably adopted. That is, the method for producing the polyamide resin composition is preferably a production method by a method capable of uniformly mixing the semi-aromatic polyamide resin, at least one selected from the group consisting of a crystal nucleating agent and an antioxidant, and other additives as necessary. For the mixing, in general, a melt-kneading method using a single screw extruder, a twin screw extruder, a kneader, or a Banbury mixer is preferably adopted. The melt-kneading conditions are not particularly limited, and examples thereof include a method in which melt-kneading is performed for about 1 to 30 minutes in a temperature range about 10 to 60°C higher than the melting point of the polyamide resin to obtain a pelletized polyamide resin composition.

### [Molded Article]

### (Molding method)

The molded article of the present embodiment can be a molded article made of the semi-aromatic polyamide resin. Alternatively, the molded article may be a molded article made of a polyamide resin composition. The molded article is produced by a known molding method using the semi-aromatic polyamide resin or the polyamide resin composition. Specifically, it can be obtained by molding by various molding methods such as an injection molding method, a blow molding method, an extrusion molding method, a compression molding method, a stretch molding method, a vacuum molding method, a foam molding method, a rotational molding method, an impregnation method, a laser sintering method, and a fused deposition modeling method. Furthermore, a molded article can also be obtained by composite molding of the semi-aromatic polyamide resin or the polyamide resin composition of the present embodiment with another polymer, a composition containing another polymer and a metal, or the like. For example, by extrusion molding a metal plate and the semi-aromatic polyamide resin composition of the present embodiment, a molded article having a layer composed of the semi-aromatic polyamide resin composition of the present embodiment on the surface of the metal plate can be obtained.

### (Application)

Since the molded article of the present embodiment is excellent in fatigue resistance and slidability, it can be used for sliding members of automobiles, electric bicycles (particularly e-bikes), industrial machines, household appliances, and the like. Examples of the sliding member include various gears, bearings, bushes, chain tensioners, bearings, end face materials of mechanical seals, valve seats of valves, V-rings, rod packings, piston rings, rotating shafts and rotating sleeves of compressors, pistons, impellers, vanes, and rotors.

Since the molded article of the present embodiment is particularly excellent in low water absorbency, it can be suitably used for a gear that requires high dimensional accuracy among the sliding members. Examples of the gear include a spur gear, a bevel gear, a helical gear, a spiral gear, a double helical gear, an internal gear, a worm gear, a rack and pinion gear, and a Geneva gear. From the viewpoint of fatigue resistance, slidability, and low water absorbency, the molded article of the present embodiment is particularly preferably used for a spur gear and a helical gear for a drive unit of an e-bike, a worm gear for an electric power steering of an automobile, and the like. Since the molded article of the present embodiment is particularly excellent in low water absorbency, the dimensional stability of the gear is high. Therefore, when used for the above-described various gears of the e-bike, noise due to meshing between the gears can be suppressed, and the quietness is excellent.

### Examples

Hereinafter, the present invention will be specifically described with reference to Examples and Comparative Examples, but the present invention is not limited thereto.

### [Evaluation Methods]

Each of the semi-aromatic polyamide resins and polyamide resin compositions obtained in Examples and Comparative Examples was evaluated according to the following methods.

### 1. Evaluation Method of Semi-Aromatic Polyamide Resin

### (Inherent Viscosity)

Each of the semi-aromatic polyamide resins obtained in Examples and Comparative Examples was dissolved in concentrated sulfuric acid as a solvent such that the concentration thereof was 0.2 g/dL to prepare a sample solution. Next, the flow-down time of the solvent (concentrated sulfuric acid) and the flow-down time of the sample solution at a temperature of 30°C were measured, and the inherent viscosity ηᵢₙₕ was determined by the following Formula (3). The results are shown in Table 2. ${η}_{inh} \left(dL/g\right) = \left[ln\left({t}_{1}/{t}_{0}\right)\right] / c$

In the above relational expression, t₀ represents the flow-down time (sec) of the solvent (concentrated sulfuric acid), t₁ represents the flow-down time (sec) of the sample solution, and c represents the concentration (g/dL) of the sample (semi-aromatic polyamide) in the sample solution.

### (Amount of Terminal Amino Groups, Amount of Terminal Carboxy Groups, and Terminal Blocking Ratio)

Using a high-resolution nuclear magnetic resonance spectrometer "ECZ-600" manufactured by JEOL Ltd., ¹H-NMR analysis was carried out under the following conditions: resolution: 600 MHz, solvent: deuterated 1,1,1,3,3,3-hexafluoroisopropanol, temperature: 50°C. The amount of terminal amino groups, the amount of terminal carboxy groups, and the amount of terminal groups blocked with a terminal blocking agent were calculated from the integrated value of the characteristic signal of each terminal group. Chemical shift values of representative signals used in the measurement are shown in Table 1. The measurement results of the amount of terminal amino groups and the amount of terminal carboxy groups are shown in Table 2.

### [Table 1]

**Table 1**

| Type of terminal group | Characteristic signal | Chemical shift value |
|---|---|---|
| Terminal amino group | 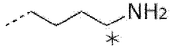 | δ 3.3 ppm |
| Terminal carboxy group | 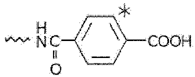 | δ 8.1 ppm |
| Terminal group blocked by terminal blocking agent | 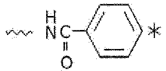 | δ 7.5 ppm |

The terminal blocking ratio of the semi-aromatic polyamide resin was determined by the following formula (1). In the formula (1), A represents the total amount of terminal groups, and B represents the total amount of terminal carboxy groups and terminal amino groups. $Terminal blocking ratio \left(%\right) = \left[\left(A-B\right)/A\right] \times 100$

The results are shown in Table 2.

### (Weight-Average Molecular Weight)

The weight-average molecular weight Mw₀ of the semi-aromatic polyamide resin is determined as a molecular weight in terms of standard polymethyl methacrylate using gel permeation chromatography (GPC). Specifically, 1.5 mg of a semi-aromatic polyamide resin was dissolved in 3 mL of an eluent, the solution was filtered through a membrane filter having a pore size of 0.4 µm to prepare a measurement sample, and the measurement sample was measured in the same manner as in the method described in "Retention Stability" of "2. Evaluation Method of Polyamide Resin Composition".

The results are shown in Table 2.

### (Melting Point and Quantity of Heat of Fusion)

The melting point and the quantity of heat of fusion ΔHm of each of the semi-aromatic polyamide resins obtained in Examples and Comparative Examples were measured using a differential scanning calorimetry analyzer "DSC7020" manufactured by Hitachi High-Tech Science Corporation.

The melting point and the quantity of heat of fusion ΔHm were measured in accordance with ISO11357-3 (2nd edition, 2011). Specifically, each semi-aromatic polyamide resin as a sample was heated from 30°C to 340°C at a rate of 10°C/min under a nitrogen atmosphere. Thereafter, the sample was held at 340°C for 5 minutes to be completely melted, then cooled to 50°C at a rate of 10°C/min, and held at 50°C for 5 minutes. Then, the peak temperature of the melting peak appearing when the temperature was raised again to 340°C at a rate of 10°C/min was taken as the melting point (°C), and the peak area was taken as the quantity of heat of fusion ΔHm (J/g).

The results are shown in Table 2.

### 2. Evaluation Method of Polyamide Resin Composition

### Preparation of test piece

For each of the polyamide resin compositions obtained in Examples and Comparative Examples, a dumbbell test piece (Type-I test piece "I-20" described in JIS K7119 (1972)) for evaluating fatigue resistance and water absorbency and a square plate test piece (length 55 mm × width 55 mm × thickness 3 mm) for evaluating slidability were respectively prepared under the conditions of a cylinder temperature of 320°C and a mold temperature of 140°C by using an 80-ton injection molding machine manufactured by Nissei Plastic Industrial Co., Ltd.

### (Amount of Terminal Amino Groups)

1 g of each of the polyamide resin compositions obtained in Examples and Comparative Examples was dissolved in 30 mL of phenol, followed by mixing with 3 mL of methanol to prepare a sample solution. Titration was carried out using a 0.01 or 0.1 N HCl aqueous solution with thymol blue as an indicator to measure the amount of terminal amino groups ([NH₂], unit: microequivalent/g) of the semi-aromatic polyamide resin contained in the polyamide resin composition.

### (Amount of Terminal Carboxy Groups)

0.5 g of each of the polyamide resin compositions obtained in Examples and Comparative Examples was dissolved in 40 mL of orthocresol to prepare a sample solution. Titration was carried out using a potentiometric titrator with a 0.01 or 0.1 N potassium hydroxide/ethanol solution, and the amount of terminal carboxy groups ([COOH], unit: microequivalent/g) of the semi-aromatic polyamide resin contained in the polyamide resin composition was measured.

### (Measurement Conditions)

· Measuring apparatus: AT-710 (manufactured by Kyoto Electronics Manufacturing Co., Ltd.)
· Main Control Unit: MCU-710 (manufactured by Kyoto Electronics Manufacturing Co., Ltd.)

### (Retention Stability)

For the retention stability, the reduction rate of the weight-average molecular weight (Mw) of the semi-aromatic polyamide resin contained in the polyamide resin composition before and after melt-kneading was evaluated. Specifically, the retention stability was evaluated according to the following criteria from the reduction rate of the weight-average molecular weight of the semi-aromatic polyamide resin contained in the polyamide resin composition represented by the following Formula (4). The results are shown in Table 3. $Reduction rate \left(%\right) of weight - average molecular weight = \left({Mw}_{0}-{Mw}_{1}\right) \times 100 / {Mw}_{0}$

In the Formula (4), Mw₀ represents the weight-average molecular weight of the semi-aromatic polyamide resin before melt-kneading, and Mw₁ represents the weight-average molecular weight of the semi-aromatic polyamide resin contained in the polyamide resin composition after melt-kneading. The melt-kneading was carried out by using a twin screw extruder "BTN-32-S2-30-L" manufactured by Research Laboratory of Plastics Technology Co., Ltd. at a cylinder temperature of 320 to 325°C and a residence time of 1 to 5 minutes.

### <Evaluation Criteria>

A: The reduction rate of the weight-average molecular weight is 20% or less.
B: The reduction rate of the weight-average molecular weight is more than 20%.

The weight-average molecular weight Mw₀ of the semi-aromatic polyamide resins before melt-kneading was a weight-average molecular weight obtained by gel permeation chromatography (GPC) in terms of standard polymethyl methacrylate. Specifically, 1.5 mg of a semi-aromatic polyamide resin was dissolved in 3 mL of an eluent, the solution was filtered through a membrane filter having a pore size of 0.4 µm to prepare a measurement sample, and the measurement sample was measured under the following conditions.

The weight-average molecular weight Mw₁ of the semi-aromatic polyamide resin contained in the polyamide resin composition after melt-kneading was a weight-average molecular weight obtained by gel permeation chromatography (GPC) in terms of standard polymethyl methacrylate. Specifically, a weight-average molecular weight obtained by the following method was used.

The polyamide resin composition was weighed so that the mass of the semi-aromatic polyamide resin contained in the polyamide resin composition was 1.5 mg, and dissolved in hexafluoroisopropanol (HFIP). Thereafter, the solution was filtered through a membrane filter having a pore size of 0.4 µm to prepare a measurement sample from which an organic component containing the semi-aromatic polyamide resin was fractionated. The measurement sample was measured under the following conditions.

### <Measurement Conditions>

· Apparatus: HLC-8320GPC (manufactured by Tosoh Corporation)
· Column: two pieces of TSKgel Super HM-N (manufactured by Tosoh Corporation) were coupled in series.
· Eluent: 0.085% sodium trifluoroacetate/HFIP solution
· Flow rate: 0.5 mL/min (reference column: 0.25 mL/min)
· Sample injection amount: 10 µL
· Column temperature: 40°C
· Standard polymethyl methacrylate: Shodex Standard M-75 (manufactured by Resonac Corporation), Polymethyl methacrylate (manufactured by Agilent Technologies, Inc.) polymethyl methacrylate having a molecular weight of 1010
· Detector: UV (254 nm) detector

### (Fatigue Resistance)

Using the obtained dumbbell test piece, a plane bending fatigue test was performed in accordance with JIS K7119 (1972). As a tester, a vibration fatigue tester "B-70-TL" manufactured by Toyo Seiki Seisaku-sho, Ltd. was used. The number of repetitions (number of cycles) until fatigue failure was measured under the conditions of a chuck-to-chuck spacing of 30 mm, an ambient temperature of 23°C, a load of 40 MPa, a load repetition rate of 1800 cycles per minute, and a stress mode of completely reversed plane bending, and this was taken as fatigue resistance.

The results are shown in Table 3.

### (Water Absorbency)

The obtained dumbbell test piece was weighed to determine the weight W₀ of the test piece before water absorption. Subsequently, the test piece was immersed in water at 23°C for 168 hours, and then weighed again to determine the weight W₁ of the test piece after water absorption. The water absorption rate was calculated by the following Formula (5) to evaluate the water absorbency. The results are shown in Table 3. $Water absorption rate \left(%\right) = \left({W}_{1}-{W}_{0}\right) \times 100 / {W}_{0}$

### (Slidability)

Using the obtained square plate test piece, a sliding wear test was performed in accordance with JIS K7218 (1986), A method. As a tester, a friction and wear testing machine "EFM-3-G" manufactured by A&D Company, Limited was used. Under conditions of a temperature of 23°C, a surface pressure of 10 kg/cm², and a sliding speed of 50 cm/sec, the wear amount (mg) and the coefficient of kinetic friction were measured with S45C of steel as a mating material, and the slidability was evaluated. The results are shown in Table 3.

### [Example 1]

### (Production of semi-aromatic polyamide resin PA9T-1)

A mixture of 1,9-nonanediamine and 2-methyl-1,8-octanediamine [the former/the latter = 85/15 (molar ratio)] in an amount of 6134.9 g (38.76 mol), terephthalic acid in an amount of 6297.2 g (37.91 mol), benzoic acid in an amount of 23.2 g (0.19 mol, 0.5 mol% with respect to 100 mol% of diamine), sodium hypophosphite monohydrate in an amount of 12.5 g (0.1% by mass with respect to the total mass of the raw material), and distilled water in an amount of 4.8 liters [the ratio (x/y) of the number of moles (x) of amino groups to the number of moles (y) of carboxy groups contained in the raw material was 1.02] was placed in an autoclave having an internal volume of 40 liters, followed by nitrogen substitution. The mixture was stirred at 100°C for 30 minutes, and the temperature inside the autoclave was then raised to 220°C over 2 hours. At this time, the pressure inside the autoclave was increased to 2 MPa. Heating was continued for 5 hours while maintaining the pressure at 2 MPa, and the reaction was allowed to proceed by gradually removing the water vapor. Thereafter, the pressure was decreased to 1.3 MPa over 30 minutes, and the reaction was further conducted for 1 hour to obtain a prepolymer. The obtained prepolymer was dried at 120°C under reduced pressure for 12 hours and pulverized to a particle diameter of 2 mm or less. This was subjected to solid-phase polymerization at 230°C and 13 Pa (0.1 mmHg) for 10 hours to obtain a white semi-aromatic polyamide resin PA9T-1.

### [Example 2]

### (Production of semi-aromatic polyamide resin PA9T-2)

A mixture of 1,9-nonanediamine and 2-methyl-1,8-octanediamine [the former/the latter = 85/15 (molar ratio)] in an amount of 7787.4 g (49.20 mol), terephthalic acid in an amount of 7967.6 g (47.96 mol), benzoic acid in an amount of 38.1 g (0.31 mol, 0.6 mol% with respect to 100 mol% of diamine), sodium hypophosphite monohydrate in an amount of 15.6 g (0.1% by mass with respect to the total mass of the raw material), and distilled water in an amount of 7.6 liters [the ratio (x/y) of the number of moles (x) of amino groups to the number of moles (y) of carboxy groups contained in the raw material was 1.02] were placed in an autoclave having an internal volume of 40 liters, and thereafter, a white semi-aromatic polyamide resin PA9T-2 was obtained in the same manner as in Example 1.

### [Example 3]

### (Production of semi-aromatic polyamide resin PA9T-3)

A mixture of 1,9-nonanediamine and 2-methyl-1,8-octanediamine [the former/the latter = 85/15 (molar ratio)] in an amount of 6603.0 g (41.72 mol), terephthalic acid in an amount of 6794.3 g (40.90 mol), benzoic acid in an amount of 25.0 g (0.21 mol, 0.5 mol% with respect to 100 mol% of diamine), sodium hypophosphite monohydrate in an amount of 13.4 g (0.1% by mass with respect to the total mass of the raw material), and distilled water in an amount of 4.5 liters [the ratio (x/y) of the number of moles (x) of amino groups to the number of moles (y) of carboxy groups contained in the raw material was 1.02] were placed in an autoclave having an internal volume of 40 liters, and thereafter, a white semi-aromatic polyamide resin PA9T-3 was obtained in the same manner as in Example 1.

### [Comparative Example 1]

### (Production of semi-aromatic polyamide resin PA9T-4)

A mixture of 1,9-nonanediamine and 2-methyl-1,8-octanediamine [the former/the latter = 85/15 (molar ratio)] in an amount of 6074.8 g (38.38 mol), terephthalic acid in an amount of 6297.2 g (37.91 mol), benzoic acid in an amount of 23.2 g (0.19 mol, 0.5 mol% with respect to 100 mol% of diamine), sodium hypophosphite monohydrate in an amount of 12.4 g (0.1% by mass with respect to the total mass of the raw material), and distilled water in an amount of 4.8 liters [the ratio (x/y) of the number of moles (x) of amino groups to the number of moles (y) of carboxy groups contained in the raw material was 1.01] were placed in an autoclave having an internal volume of 40 liters, and thereafter, a white semi-aromatic polyamide resin PA9T-4 was obtained in the same manner as in Example 1.

### [Comparative Example 2]

### (Production of semi-aromatic polyamide resin PA9T-5)

A mixture of 1,9-nonanediamine and 2-methyl-1,8-octanediamine [the former/the latter = 85/15 (molar ratio)] in an amount of 6652.8 g (41.40 mol), terephthalic acid in an amount of 6628.6 g (39.90 mol), benzoic acid in an amount of 24.4 g (0.20 mol, 0.5 mol% with respect to 100 mol% of diamine), sodium hypophosphite monohydrate in an amount of 13.2 g (0.1% by mass with respect to the total mass of the raw material), and distilled water in an amount of 5.1 liters [the ratio (x/y) of the number of moles (x) of amino groups to the number of moles (y) of carboxy groups contained in the raw material was 1.04] were placed in an autoclave having an internal volume of 40 liters, and thereafter, a white semi-aromatic polyamide resin PA9T-5 was obtained in the same manner as in Example 1.

### [Comparative Example 3]

### (Production of semi-aromatic polyamide resin PA9T-6)

A mixture of 1,9-nonanediamine and 2-methyl-1,8-octanediamine [the former/the latter = 80/20 (molar ratio)] in an amount of 7891.0 g (49.85 mol), terephthalic acid in an amount of 8076.0 g (48.61 mol), benzoic acid in an amount of 103.0 g (0.84 mol, 1.7 mol% with respect to 100 mol% of diamine), sodium hypophosphite monohydrate in an amount of 16.0 g (0.1% by mass with respect to the total mass of the raw material), and distilled water in an amount of 7.7 liters [the ratio (x/y) of the number of moles (x) of amino groups to the number of moles (y) of carboxy groups contained in the raw material was 1.02] were placed in an autoclave having an internal volume of 40 liters, and thereafter, a white semi-aromatic polyamide resin PA9T-6 was obtained in the same manner as in Example 1.

### [Table 2]

**Table 2**

| | | Unit | Example 1 | Example 2 | Example 3 |
|---|---|---|---|---|---|
| Type of semi-aromatic polyamide resin | | - | PA9T-1 | PA9T-2 | PA9T-3 |
| Physical properties of semi-aromatic polyamide resin | Inherent viscosity ηᵢₙₕ | dL/g | 1.88 | 1.77 | 2.10 |
| | Amount of terminal amino groups [NH₂] | microequivalent/g | 31.9 | 15.4 | 43.8 |
| | Amount of terminal carboxy groups [COOH] | microequivalent/g | 78.8 | 78.9 | 62.8 |
| | [NH₂]/[COOH] | - | 0.40 | 0.20 | 0.70 |
| | Weight-average molecular weight Mw₀ | - | 57100 | 61800 | 59000 |
| | Terminal blocking ratio | % | 13 | 16 | 11 |
| | Melting point | °C | 295 | 293 | 295 |
| | Quantity of heat of fusion ΔHm | J/g | 44.1 | 44.0 | 46.7 |

**Table 2 (continued)**

| | | Unit | Comparative Example 1 | Comparative Example 2 | Comparative Example 3 |
|---|---|---|---|---|---|
| Type of semi-aromatic polyamide resin | | - | PA9T-4 | PA9T-5 | PA9T-6 |
| Physical properties of semi-aromatic polyamide resin | Inherent viscosity ηᵢₙₕ | dL/g | 1.26 | 2.67 | 1.50 |
| | Amount of terminal amino groups [NH₂] | microequivalent/g | 26.2 | 71.4 | 18.0 |
| | Amount of terminal carboxy groups [COOH] | microequivalent/g | 127.8 | 24.1 | 53.2 |
| | [NH₂]/[COOH] | - | 0.21 | 3.0 | 0.34 |
| | Weight-average molecular weight Mw₀ | - | 35500 | 102000 | 44000 |
| | Terminal blocking ratio | % | 11 | 15 | 44 |
| | Melting point | °C | 305 | 294 | 299 |
| | Quantity of heat of fusion ΔHm | J/g | 54.9 | 37.6 | 39.9 |

### (Production of Polyamide Resin Composition)

Each of the semi-aromatic polyamide resins and the following crystal nucleating agent, antioxidant, and other additives (lubricant) were mixed in advance at a proportion shown in Table 3. The mixture was charged into a supply port of an upstream portion of a twin screw extruder "BTN-32-S2-30-L" (manufactured by Research Laboratory of Plastics Technology Co., Ltd.). The mixture was melt-kneaded at a cylinder temperature of 320 to 325°C, extruded, cooled and cut to produce each polyamide resin composition in the form of pellets.

The respective components shown in Table 3 are as follows.
· Crystal nucleating agent
"MICRON WHITE #5000S", manufactured by Hayashi Kasei Co., Ltd.
· Antioxidant
"SUMILIZER GA-80" manufactured by Sumitomo Chemical Co., Ltd.
· Slidability improver
"Licowax PED191", manufactured by Clariant Plastics & Coatings (Japan) K.K.
· Other additives (lubricant)
"LICOWAX OP", manufactured by Clariant Plastics & Coatings (Japan) K.K.

### [Table 3]

**Table 3**

| | | | Unit | Example 4 | Example 5 | Example 6 | Example 7 |
|---|---|---|---|---|---|---|---|
| Composition of polyamide resin composition | Semi-aromatic polyamide resin | PA9T-1 | Parts by mass | 100 | - | - | - |
| | | PA9T-2 | Parts by mass | - | 100 | 97 | - |
| | | PA9T-3 | Parts by mass | - | - | - | 100 |
| | | PA9T-4 | Parts by mass | - | - | - | - |
| | | PA9T-5 | Parts by mass | - | - | - | - |
| | | PA9T-6 | Parts by mass | - | - | - | - |
| | Crystal nucleating agent | | Parts by mass | 3.0 | 3.0 | 3.0 | 3.0 |
| | Antioxidant | | Parts by mass | 0.2 | 0.2 | 0.5 | 0.2 |
| | Slidability improver | | Parts by mass | - | - | 3.0 | - |
| | Other additives | Lubricant | Parts by mass | 0.2 | 0.2 | 0.2 | 0.2 |
| Physical properties and evaluation of polyamide resin composition | Polyamide resin composition or molded article (test piece) | Amount of terminal amino groups [NH₂] | microequivalent/g | 24.9 | 19.9 | 16.7 | 32.3 |
| | | Amount of terminal carboxy groups [COOH] | microequivalent/g | 54.4 | 70.3 | 79.1 | 50.1 |
| | | [NH₂]/[COOH] | - | 0.46 | 0.28 | 0.21 | 0.64 |
| | | Weight-average molecular weight Mw₁ | - | 49700 | 64900 | 59300 | 53600 |
| | | Retention stability | - | A | A | A | A |
| | | Fatigue resistance (23°C, 40 MPa) | Cycles | 3.0.E+06 | 5.8.E+05 | 7.7.E+05 | 1.8.E+06 |
| | | Water absorption rate (23°C, 168 hours) | % | 0.45 | 0.44 | 0.42 | 0.45 |
| | | Wear amount | mg | 130 | 110 | 12 | 83 |
| | | Coefficient of kinetic friction | - | 0.45 | 0.43 | 0.17 | 0.44 |

**Table 3 (continued)**

| | | | Unit | Comparative Example 4 | Comparative Example 5 | Comparative Example 6 |
|---|---|---|---|---|---|---|
| Composition of polyamide resin composition | Semi-aromatic polyamide resin | PA9T-1 | Parts by mass | - | - | - |
| | | PA9T-2 | Parts by mass | - | - | - |
| | | PA9T-3 | Parts by mass | - | - | - |
| | | PA9T-4 | Parts by mass | 100 | - | - |
| | | PA9T-5 | Parts by mass | - | 100 | - |
| | | PA9T-6 | Parts by mass | - | - | 100 |
| | Crystal nucleating agent | | Parts by mass | 3.0 | 3.0 | 3.0 |
| | Antioxidant | | Parts by mass | 0.2 | 0.2 | 0.2 |
| | Slidability improver | | Parts by mass | - | - | - |
| | Other additives | Lubricant | Parts by mass | 0.2 | 0.2 | 0.2 |
| Physical properties and evaluation of polyamide resin composition | Polyamide resin composition or molded article (test piece) | Amount of terminal amino groups [NH₂] | microequivalent/g | 14.4 | 89.2 | 16.6 |
| | | Amount of terminal carboxy groups [COOH] | microequivalent/g | 89.4 | 21.7 | 83.6 |
| | | [NH₂]/[COOH] | - | 0.16 | 4.1 | 0.20 |
| | | Weight-average molecular weight Mw₁ | - | 26600 | 54100 | 38700 |
| | | Retention stability | - | B | B | A |
| | | Fatigue resistance (23°C, 40 MPa) | Cycles | 1.6.E+05 | 1.6.E+06 | 3.2.E+05 |
| | | Water absorption rate (23°C, 168 hours) | % | 0.42 | 0.45 | 0.42 |
| | | Wear amount | mg | 70 | 110 | 200 |
| | | Coefficient of kinetic friction | - | 0.38 | 0.46 | 0.45 |

It can be seen from Table 2 that the semi-aromatic polyamide resins of Examples 1 to 3 have an inherent viscosity ηᵢₙₕ, as measured in concentrated sulfuric acid at 30°C, of 1.6 to 3.0 dL/g, an amount of terminal amino groups of 10 to 70 microequivalent/g, an amount of terminal carboxy groups of 10 to 90 microequivalent/g, and a ratio [NH₂]/[COOH], which is the ratio of the amount of terminal amino groups [NH₂] (microequivalent/g) to the amount of terminal carboxy groups [COOH] (microequivalent/g), of 0.1 or more and less than 1.0.

It can be seen from Table 3 that the compositions of Examples 4 to 7 contain the semi-aromatic polyamide resins of Examples 1 to 3 and have high retention stability and high fatigue resistance.

Therefore, it can be seen from Table 2 and Table 3 that the semi-aromatic polyamide resins and the polyamide resin compositions of Examples have improved retention stability during melt processing while maintaining excellent fatigue resistance, and are excellent in both fatigue resistance and retention stability.

## Claims

1. A semi-aromatic polyamide resin comprising a diamine unit and a dicarboxylic acid unit,
wherein the diamine unit contains 60 to 100 mol% of an aliphatic diamine unit having 7 to 13 carbon atoms with respect to 100 mol% of the diamine unit,
the dicarboxylic acid unit contains 60 to 100 mol% of an aromatic dicarboxylic acid unit with respect to 100 mol% of the carboxylic acid unit,
an inherent viscosity ηᵢₙₕ measured at 30°C in concentrated sulfuric acid is 1.6 to 3.0 dL/g,
an amount of terminal amino groups [NH₂] is 10 to 70 microequivalent/g,
an amount of terminal carboxy groups [COOH] is 10 to 90 microequivalent/g, and
a ratio of the amount of terminal amino groups [NH₂] to the amount of terminal carboxy groups [COOH], [NH₂]/[COOH], is 0.1 or more and less than 1.0.

2. The semi-aromatic polyamide resin according to claim 1, wherein the aliphatic diamine unit having 7 to 13 carbon atoms is at least one selected from a 1,10-decanediamine unit, a 1,9-nonanediamine unit, and a 2-methyl-1,8-octanediamine unit.

3. The semi-aromatic polyamide resin according to claim 1 or 2, wherein the inherent viscosity ηᵢₙₕ is 1.7 to 2.5 dL/g.

4. The semi-aromatic polyamide resin according to claim 1 or 2, wherein the inherent viscosity ηᵢₙₕ is 1.8 to 2.5 dL/g.

5. The semi-aromatic polyamide resin according to any one of claims 1 to 4, wherein the amount of terminal amino groups [NH₂] is 20 to 60 microequivalent/g.

6. The semi-aromatic polyamide resin according to any one of claims 1 to 4, wherein the amount of terminal amino groups [NH₂] is 30 to 60 microequivalent/g.

7. The semi-aromatic polyamide resin according to any one of claims 1 to 6, wherein the amount of terminal carboxy groups [COOH] is 30 to 80 microequivalent/g.

8. The semi-aromatic polyamide resin according to any one of claims 1 to 7, wherein the [NH₂]/[COOH] is 0.2 to 0.9.

9. A polyamide resin composition comprising the semi-aromatic polyamide resin according to any one of claims 1 to 8 and a crystal nucleating agent.

10. The polyamide resin composition according to claim 9, comprising 0.01 to 10 parts by mass of the crystal nucleating agent with respect to 100 parts by mass of the semi-aromatic polyamide resin.

11. A polyamide resin composition comprising the semi-aromatic polyamide resin according to any one of claims 1 to 10 and an antioxidant.

12. The polyamide resin composition according to claim 11, comprising 0.01 to 5 parts by mass of the antioxidant with respect to 100 parts by mass of the semi-aromatic polyamide resin.

13. A polyamide resin composition comprising a semi-aromatic polyamide resin comprising a diamine unit and a dicarboxylic acid unit,
wherein the diamine unit contains 60 to 100 mol% of an aliphatic diamine unit having 7 to 13 carbon atoms with respect to 100 mol% of the diamine unit,
the dicarboxylic acid unit contains 60 to 100 mol% of an aromatic dicarboxylic acid unit with respect to 100 mol% of the carboxylic acid unit,
wherein the semi-aromatic polyamide resin has a weight-average molecular weight Mw of 40,000 to 90,000 in terms of polymethyl methacrylate as measured by gel permeation chromatography (GPC),
an amount of terminal amino groups [NH₂] is 10 to 70 microequivalent/g,
an amount of terminal carboxy groups [COOH] is 10 to 90 microequivalent/g, and
a ratio of the amount of terminal amino groups [NH₂] to the amount of terminal carboxy groups [COOH], [NH₂]/[COOH], is 0.1 or more and less than 1.0.

14. The polyamide resin composition according to claim 13, further comprising at least one selected from the group consisting of a crystal nucleating agent, an antioxidant, a slidability improver, and a lubricant.

15. The polyamide resin composition according to claim 14, comprising 0.01 to 10 parts by mass of at least one selected from the group consisting of a crystal nucleating agent, an antioxidant, a slidability improver, and a lubricant with respect to 100 parts by mass of the semi-aromatic polyamide resin.

16. A molded article formed from the polyamide resin composition according to any one of claims 9 to 15.

17. The molded article according to claim 16, which is a sliding member.

18. The molded article according to claim 17, which is a gear.

19. A method for producing a semi-aromatic polyamide resin having a diamine unit and a dicarboxylic acid unit, the method comprising:
a first reaction step of subjecting a raw material containing an aliphatic diamine, an aromatic dicarboxylic acid, and a terminal blocking agent to a polycondensation reaction to obtain a primary polycondensation reaction product, and
a second reaction step of subjecting the primary polycondensation reaction product to a solid phase polymerization to obtain the semi-aromatic polyamide resin,
wherein a ratio x/y of a number of moles of amino groups (x) to a number of moles of carboxy groups (y) contained in the raw material is more than 1.01 and 1.03 or less, and
an amount of the terminal blocking agent contained in the raw material is 0.1 to 1.5 mol% with respect to 100 mol% of the diamine contained in the raw material.
